# EUROPÄISCHE PATENTSCHRIFT

(11) **EP 0 584 090 B1**
(45) Veröffentlichungstag und Bekanntmachung des Hinweises auf die Patenterteilung: **12.10.1994**
(21) Anmeldenummer: 92908028.1
(22) Anmeldetag: 03.04.1992
(51) Int. Cl.: B60K 6/04, B60K 17/34

(54) **HYBRIDFAHRZEUG MIT VIERRADANTRIEB**
FOUR WHEEL DRIVE HYBRID VEHICLE
VEHICULE HYBRIDE A QUATRE ROUES MOTRICES

(30) Priorität: 10.05.1991 DE 4115306
(43) Veröffentlichungstag der Anmeldung: 02.03.1994
(73) Patentinhaber: AUDI AG, 85002 Ingolstadt (DE)
(72) Erfinder: GAHLEITNER, Alfred, A-8010 Graz (AT); GEELINK, Andreas, D-8071 Lenting (DE); HEIDL, Roland, W-8071 Lenting (DE)
(74) Vertreter: Le Vrang, Klaus
(86) Internationale Anmeldenummer: EP9200749
(87) Internationale Veröffentlichungsnummer: WO9220544

(56) Entgegenhaltungen:
- DE-C- 467 381
- US-A- 3 904 883
- US-A- 4 762 191

## Beschreibung

Die Erfindung betrifft ein zweiachsiges Kraftfahrzeug gemäß Oberbegriff des Anspruchs 1.

Derartige zweiachsige Kraftfahrzeuge, die in herkömmlicher Weise über eine Brennkraftmaschine angetrieben werden und einen permanenten Allradantrieb besitzen, sind Stand der Technik und werden von der Anmelderin unter dem Warenzeichen "quattro" angeboten.

Zur Erfüllung von vorhandenen oder beabsichtigten gesetzlichen Vorschriften sind Hybridfahrzeuge bekannt, die sowohl über eine Brennkraftmaschine als auch über einen Elektromotor antreibbar sind. Es ist dabei übliches Vorgehen, entweder Verbrennungsmotor oder Elektromotor wahlweise auf eine angetriebene Achse wirken zu lassen, oder aber der einen Achse die Brennkraftmaschine und der anderen Achse den Elektromotor zuzuordnen (vgl. DE-A 39 40 172, veröffentlicht am 06.06.1991). Einen Überblick über den Stand der Entwicklung bei Elektro- und Hybridfahrzeugen gibt die Literaturstelle A. Gahleitner, Stand der Entwicklung von Elektro-Straßenfahrzeugen, ÖZE, Jg. 42, Heft 5, s. 179 ff.

Dadurch ist ein verhältnismäßig aufwendiges Antriebskonzept notwendig.

Aufgabe der Erfindung ist es, den Aufwand für das Antriebskonzept zu verringern.

Erfindungsgemäß läßt sich dies bei einem gattungsgemäßen Kraftfahrzeug dadurch erreichen, daß der Elektromotor, der mit der Kardanwelle kombiniert ist, zwei Abtriebe aufweist, deren einer über die Kardanwelle zu den Vorderrädern führt und deren zweiter über das Hinterachsdifferential zu den Hinterrädern führt. Diese Lösung bietet den Vorteil, daß der bereits vorher vorhandene permanente Allradantrieb auch bei elektromotorischer Betriebsweise beibehalten wird. In noch stärkerem Maße jedoch machen sich die Vorteile geltend, wenn der Elektromotor zugleich sich als Generator schalten läßt, um bei Bremsen oder im Schubbetrieb, z. B. bergab, elektrische Energie aus der mechanischen rückgewinnen zu können. Beim Rekuperationsbetrieb wird in der erfindungsgemäßen Anordnung die gleichzeitige Beaufschlagung aller vier Räder mit Bremskraft erreicht, so daß es insbesondere bei glatten Straßen zu keinem unkontrollierten Betriebsverhalten kommt, sondern die Bremswirkung in herkömmlicher und gewohnter Weise einsetzt. Zugleich wird durch den Aufbau erreicht, daß der Aufwand und auch der Einbauraum für das Antriebskonzept klein gehalten wird. Fahrzeuge nach dem Stand der Technik konnten in diesem Falle stets nur zwei Räder abbremsen, was zu gefährlichen Betriebszuständen führen kann.

Durch das Vermeiden von Visco-Kupplungen ist es möglich, den Abtrieb gleichermaßen nach vorne und hinten beizubehalten.

Erfindungsgemäß läßt sich günstig ein Permanentmagnet-Synchronmotor einsetzen, in diesem Fall bietet ein Abschnitt der Kardanwelle den Läufer, die Kardanwelle muß außen lediglich mit Permanentmagneten versehen werden, die günstigerweise aufgeklebt werden. Eine zusätzliche Bandage fixiert die Magnete. Umgeben von den Ständerwicklungen wird eine kleine Baueinheit erreicht. Die Drehzahl der Kardanwelle ist dabei so ausgelegt, daß auch bei der Höchstgeschwindigkeit die zulässige Drehzahl für den Elektromotor eingehalten wird (ca. 10 000 Umdrehungen/Minute). Dieser Vorteil ist ohne entsprechende Übersetzungen bei anderen Motoren schwer zu erzielen, da die Läuferwicklungen derartig hohe Drehzahlen nicht standhalten können.

Dadurch wird es möglich, Elektromotor und Hinterachsdifferential zu einer einzigen Baueinheit zusammenzufügen, so daß der Elektromotor platzsparend und zudem für die Gewichtsverteilung im Fahrzeug günstig angeordnet werden kann.

Im folgenden wird die Erfindung anhand der Zeichnung beschrieben. Es zeigen:

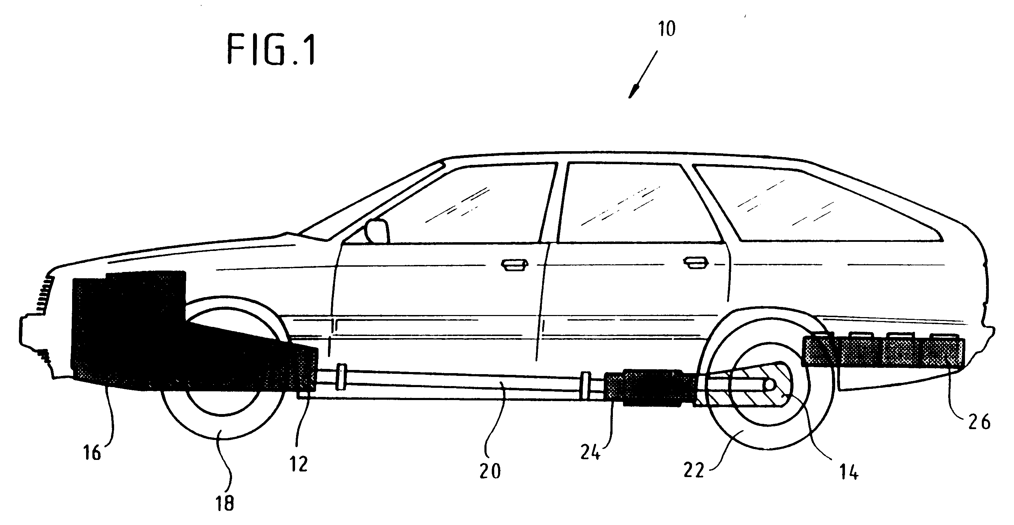

- Fig. 1: eine Seitenansicht zur Darstellung der Einbauanlage;
- Fig. 2: einen Schnitt durch den Elektromotor.

Mit dem Bezugszeichen 10 ist ein Hybridfahrzeug dargestellt, das im Bereich der Vorderräder 18 eine Brennkraftmaschine 16 sowie ein daran anschließendes Getriebe 12 aufweist. Am Getriebeausgang befindet sich ein Zwischendifferential, von dem zum einen eine Antriebswelle auf die Vorderräder 18 wirkt, sowie über eine Kardanwelle 20 und ein Hinterachsdifferential 14 die Hinterräder 22 angetrieben werden.

Zusätzlich ist ein Elektromotor 24 vorgesehen, der über einen Batteriesatz 26 mit elektrischer Energie versorgt wird und die Kardanwelle antreiben kann.

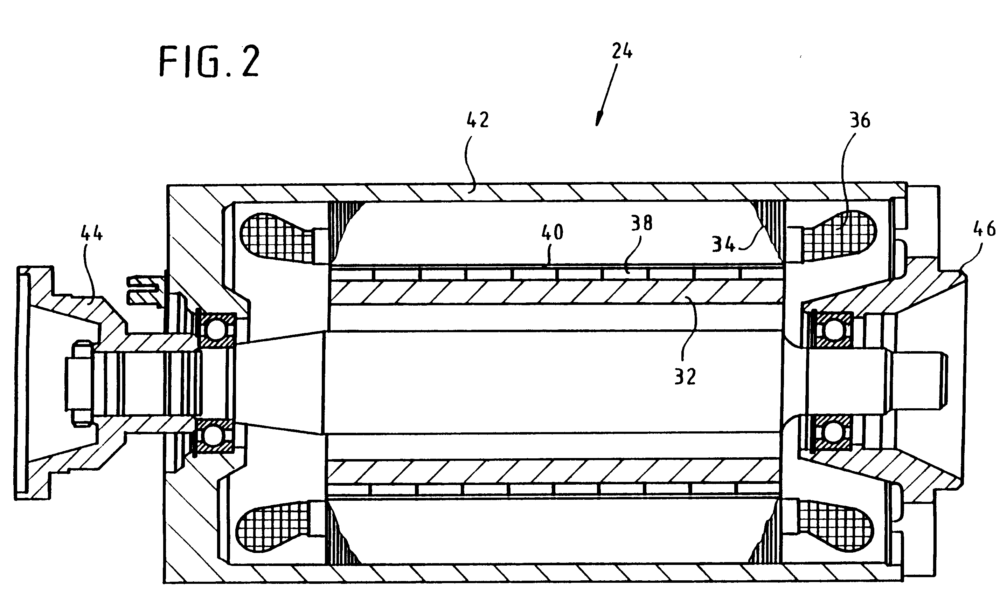

Der Aufbau des Elektromotors ist in Fig. 2 im Detail dargestellt. Der Elektromotor besitzt einen Rotor oder Läufer 32 und einen Ständer oder Stator 34, der Stator 34 ist aus einzelnen Wicklungen mit entsprechenden Wikkelköpfen 36 gebildet.

Der Rotor 32 bildet dabei einen Teil der Kardanwelle 20 und ist durch einen Flansch 44 direkt mit ihr verbunden. Die Außenseite des Rotors 32 ist mit Permanentmagneten 38 beklebt. Zwischen den Permanentmagneten 38 mit Bandagen und dem Stator 34 ist ein Luftspalt 40 vorgesehen. Ein Gehäuse 42 umschließt den Aufbau.

Im Bereich 46, dem Ende 44 mit der angeflanschten Kardanwelle 20 gegenüberliegend ist die direkte Verbindung des Elektromotors 24 mit dem Hinterachsdifferential 14 vorgesehen.

Durch die Auslegung des Elektromotors als Permanentmagnet-Synchronmotor ist eine Umdrehungszahl des Läufers 32 von bis zu 10 000 Umdrehungen pro Minute möglich, so daß auch bei schnellaufenden Fahrzeugen ein ständiges Mitlaufen des Motors 24 möglich ist, ohne daß der Motor beschädigt wird.

## Patentansprüche

1. Zweiachsiges Kraftfahrzeug mit einer Motor-/Getriebe-Einheit (16, 18) im Bereich der Vorderachse (12), einer angetriebenen Vorderachse (12), einem Abtrieb über ein Zwischendifferential, eine Kardanwelle (20) und ein Hinterachsdifferential (22) auf die Hinterräder zur Erzielung eines permanenten Allradantriebs, und mit einem zusätzlichen Elektromotor zum Antreiben der Kardanwelle (20), dadurch gekennzeichnet, daß der Elektromotor (24) zwei Abtriebe aufweist, deren einer über die Kardanwelle (20) zu den Vorderrädern führt und deren zweiter über das Hinterachsdifferential (22) zu den Hinterrädern führt.

2. Kraftfahrzeug nach Anspruch 1, dadurch gekennzeichnet, daß der Elektromotor (24) ein Permanentmagnet-Synchronmotor ist, dessen Läufer durch einen mit permanenten Magneten ausgerüsteten Abschnitt der Kardanwelle gebildet ist, der von dem Ständer umgeben ist.

3. Kraftfahrzeug nach Anspruch 2, dadurch gekennzeichnet, daß der Elektromotor mit dem Hinterachsdifferential zu einer Baueinheit zusammengefaßt ist.

## Claims

1. Four-wheel motor vehicle with an engine/gearbox unit (16,18) in the region of the front axle (12), a driven front axle (12), with a drive output via an inter axle differential, a cardan shaft (20) and a rear-axle differential (22) onto the rear wheels for achieving permanent four-wheel drive, and with an additional electric motor for driving the cardan shaft (20), characterised in that the electric motor (24) has two drive outputs, one of which runs via the cardan shaft (20) to the front wheels and the second of which runs via the rear-axle differential (22) to the rear wheels.

2. Motor vehicle according to claim 1, characterised in that the electric motor (24) is a permanent-magnet synchronous motor, the rotor of which is constituted by a section of the cardan shaft equipped with permanent magnets and surrounded by the stator.

3. Motor vehicle according to claim 2, characterised in that the electric motor is combined with the rear-axle differential to form a standardised unit.

## Revendications

1. Véhicule automobile à deux essieux, comportant un ensemble moteur et boîte de vitesse (16, 18) dans la région de l'essieu avant (12), un essieu avant entraîné (12), une prise de mouvement pour l'entraînement des roues arrière au moyen d'un différentiel intermédiaire, d'un arbre de transmission (20) et d'un différentiel d'essieu arrière (22), pour l'obtention d'une traction permanente sur les quatre roues, ainsi qu'un moteur électrique supplémentaire pour l'entraînement de l'arbre de transmission (20), caractérisé en ce que le moteur électrique (24) présente deux prises de mouvement, dont l'une aboutit aux roues avant par l'intermédiaire de l'arbre de transmission (20) et dont la seconde aboutit aux roues arrière par l'intermédiaire du différentiel d'essieu arrière (22).

2. Véhicule automobile selon la revendication 1, caractérisé en ce que le moteur électrique (24) est un moteur synchrone à aimants permanents, dont le rotor est constitué par un segment de l'arbre de transmission qui est équipé d'aimants permanents et qui est entouré par le stator.

3. Véhicule automobile selon la revendication 2, caractérisé en ce que le moteur électrique est réuni en un ensemble avec le différentiel d'essieu arrière.
